# EUROPÄISCHE PATENTSCHRIFT

(11) **EP 1 342 621 B1**
(45) Veröffentlichungstag und Bekanntmachung des Hinweises auf die Patenterteilung: **19.01.2005**
(21) Anmeldenummer: 03002767.6
(22) Anmeldetag: 07.02.2003
(51) Int. Cl.: B60R 13/02, B60R 21/20, D04B 1/16

(54) **Gestrickte oder gewirkte textile Verkleidung für Kfz-Armaturenbretter**
Knitted fabric textile trim for motor vehicle dash boards
Habillage textile tricoté ou maillé pour un tableau de bord d'un véhicule à moteur

(30) Priorität: 06.03.2002 DE 20203641 U
(43) Veröffentlichungstag der Anmeldung: 10.09.2003
(73) Patentinhaber: Mattes & Ammann KG, 72469 Messstetten (Tieringen) (DE); DaimlerChrysler AG, 70567 Stuttgart (DE)
(72) Erfinder: Larsén, Christoph Sven, 72469 Messstetten (Tieringen) (DE); Vogt, Alexandra, 71272 Renningen (DE)
(74) Vertreter: Fleck, Thomas, Dr. Dipl.-Chem.

(56) Entgegenhaltungen:
- DE-A- 3 636 876
- DE-A- 4 206 997
- US-A- 4 837 387
- US-A- 5 571 355

## Beschreibung

Die Erfindung betrifft textile Kfz-Armaturenbrettverkleidungen.

Derartige Verkleidungen sind im Stand der Technik in den unterschiedlichsten Ausführungsformen bekannt. Gerade in den Bereichen, hinter denen ein Airbag angeordnet ist, weisen die vorbekannten Verkleidungen sichtbare Sollbruchstellen auf, damit der Airbag im Einsatzfall das Armaturenbrett zusammen mit dem Verkleidungsstoff durchschlagen kann, um seine rettende Wirkung entfalten zu können.

Die Sollbruchstellen haben sich jedoch aus optischen Gründen als unvorteilhaft erwiesen.

Der Erfindung liegt deshalb die Aufgabe zugrunde hier Abhilfe zu schaffen, was dadurch erreicht wird, daß die Verkleidung aus 75-95 Gew.% Polypropylen und 5-25 Gew.% Polyester besteht, und wobei der Polyester aus monofilen Fäden besteht.

Die erfindungsgemäße aus einem Kunststoffgemisch bestehende Verkleidung läßt sich nach wie vor gut auf unterschiedliche Weisen mit dem Armaturenbrett verarbeiten, beispielsweise durch Verkleben, Kaschieren etc.. Sie kommt jedoch ohne Sollbruchstellen aus, da die dünnen Monofilfäden keine linienförmige, erkennbare Sollbruchstelle im Textil ausbilden, sondern dieselbe flächig über das ganze Armaturenbrett hinweg verteilen und somit gewährleisten, daß der Airbag seiner Funktion gerecht werden kann.

Vorteilhafterweise weist der Polyester einen Titer von dtex 15 bis 25 auf, wobei der Wert von 20 besonders bevorzugt ist. Ein besonders vorteilhaftes.Gewichtsverhältnis ergibt sich bei 88 Gew.% PP im Verhältnis zu 12. Gew.% PE, so daß ein Gewicht von 196 g/m² vorliegt. Für den Fachmann sind hier jedoch auch gewisse Abänderungen möglich.

## Patentansprüche

1. Gestrickte oder gewirkte textile Verkleidung für Kfz-Armaturenbretter auch für Bereiche, hinter denen ein Airbag angeordnet ist, **dadurch gekennzeichnet, daß** die Verkleidung aus 75-95 Gew.-% Polypropylen und 5-25 Gew.-% Polyester besteht, und daß der Polyester aus monofilen Fäden besteht.

2. Verkleidung nach Anspruch 1, **dadurch gekennzeichnet, daß** der Polyester einen Titer von dtex 10-30, insbesondere 20 aufweist.

3. Verkleidung nach Anspruch 1 und 2, **dadurch gekennzeichnet, daß** das Gestrick der Verkleidung 160-240 g/m² beträgt.

## Claims

1. Knitted or warp knitted textile covering for motor vehicle dashboards, also for those areas behind which an airbag is located, **characterized in that** the covering comprises 75 to 95 wt.% polypropylene and 5 to 25 wt.% polyester and that the polyester comprises monofilament threads.

2. Covering according to claim 1, **characterized in that** the polyester has a titre of dtex 10-30, particularly 20.

3. Covering according to claim 1 and 2, **characterized in that** the knitting of the covering is 160 to 240 g/m².

## Revendications

1. Revêtement textile tricoté ou à mailles destiné à des tableaux de bord de véhicules automobiles, également à des zones derrière lesquelles est disposé un coussin à gaz, **caractérisé en ce que** le revêtement est constitué de 75 à 95 % en poids de polypropylène et de 5 à 25 % en poids de polyester, et **en ce que** le polyester est constitué de fils monofilaires.

2. Revêtement selon la revendication 1, **caractérisé en ce que** le polyester possède un titre de 10 à 30, notamment de 20, dtex.

3. Revêtement selon la revendication 1 ou 2, **caractérisé en ce que** le tricotage du revêtement est de 160 à 240 g/m².
